(19) Europäisches Patentamt
European Patent Office
Office européen des brevets

(11) **EP 0 576 789 B1**

(12) **EUROPÄISCHE PATENTSCHRIFT**

(45) Veröffentlichungstag und Bekanntmachung des Hinweises auf die Patenterteilung:
06.08.1997 Patentblatt 1997/32

(51) Int Cl.⁶: **F16D 35/02**

(21) Anmeldenummer: 93105024.9

(22) Anmeldetag: 26.03.1993

(54) **Flüssigkeitsreibungskupplung**

Fluid friction coupling

Accouplement à friction de fluide

(84) Benannte Vertragsstaaten:
DE ES FR GB IT

(30) Priorität: 30.06.1992 DE 4221450

(43) Veröffentlichungstag der Anmeldung:
05.01.1994 Patentblatt 1994/01

(73) Patentinhaber: **Behr GmbH & Co.**
D-70469 Stuttgart (DE)

(72) Erfinder:
• **Martin, Hans, Dipl.-Ing.**
W-7000 Stuttgart 1 (DE)

• **Hummel, Werner**
**W-7151 Affalterbach (DE)**

(74) Vertreter: **Heumann, Christian**
**Behr GmbH & Co.,**
**Patentabteilung,**
**Postfach 30 09 20**
**70449 Stuttgart (DE)**

(56) Entgegenhaltungen:
EP-A- 0 439 859         DE-A- 3 242 381
DE-A- 3 324 982         US-A- 4 924 987

**Beschreibung**

Die Erfindung bezieht sich auf eine Flüssigkeitsreibungskupplung nach dem Oberbegriff des Patentanspruches 1, wie sie beispielsweise aus der DE-C 28 14 608 bekannt ist.

Bei solchen bekannten Kupplungen besteht oft das technische Problem, daß die Leerlaufdrehzahl zu niedrig ist, d.h. die Drehzahl, mit der das Abtriebsteil der Kupplung bei abgeschalteter Kupplung, d.h. geschlossenem Ventilhebel, umläuft. Bei dermaßen niedrigen Leerlaufdrehzahlen schaltet die Kupplung dann im Bedarfsfalle nicht zu, weil der Druck in der Vorratskammer zu klein ist. Man hat daher zur Erhöhung der Leerlaufdrehzahl bereits vorgeschlagen, in der Trennwand zwischen Vorratskammer und Arbeitskammer sogenannte Leckölbohrungen vorzusehen, durch welche ein ständiger Ölstrom von der Vorratskammer in die Arbeitskammer fließt und damit den Füllungsgrad der Arbeitskammer anhebt und somit gleichzeitig die Leerlaufdrehzahl erhöht (DE-GM 83 23 498). Diese Maßnahme der Leckölbohrungen ist jedoch nicht für alle Zwecke ausreichend.

Durch die **DE-A 33 24 982** wurde eine Flüssigkeitsreibungskupplung mit einem Fliehkraftventil bekannt, welches im Rücklaufkanal zwischen Arbeits- und Vorratskammer angeordnet ist und den Rücklaufkanal in Abhängigkeit von der Abtriebsdrehzahl der Kupplung öffnet. Im Stillstand ist der Rücklaufkanal daher geschlossen, so daß keine Strömungsverbindung zwischen Arbeits- und Vorratskammer besteht.

Ähnlich ist eine bekannte Flüssigkeitsreibungskupplung gemäß **DE-A 32 42 381** aufgebaut, wobei im Rückströmkanal (Pumpkanal) zwischen Arbeits- und Vorratskammer gemäß Fig. 5 ein Rückschlagventil vorgesehen ist, welches nicht in Abhängigkeit von der Zentrifugalkraft, sondern vom Überdruck zwischen Arbeits- und Vorratskammer arbeitet. Dieses Rückschlagventil ist als Kunststoffklappe ausgebildet und erlaubt lediglich die Strömungsrichtung von der Arbeitskammer in die Vorratskammer und nicht umgekehrt. Dieses Kunststoffventil ist bezüglich seiner Elastizitätseigenschaften temperaturabhängig.

Aufgabe der vorliegenden Erfindung ist es daher, bei gattungsgemäßen Kupplungen die Leerlaufdrehzahl durch einfache Maßnahmen zu erhöhen und diese Leerlaufdrehzahl möglichst auch auf einem definierten Drehzahlniveau zu stabilisieren. Gelöst wird diese Aufgabe durch die kennzeichnenden Merkmale des Patentanspruches 1, d.h. durch ein sogenanntes Differenzdruckventil im Rückströmkanal der Kupplung. Diese Maßnahme beruht auf der Erkenntnis, daß eine Erhöhung der Leerlaufdrehzahl durch Vergrößerung des statischen Druckes im Vorratsraum erreicht werden kann. Dies geschieht durch Verwendung des erfindungsgemäßen Differenzdruckventiles, dessen Öffnungsdruck sich zum statischen Druck in der Vorratskammer addiert. Dadurch fließt weniger Öl aus der Arbeitskammer in die Vorratskammer, und der Füllungsgrad in der Arbeitskammer steigt und demzufolge auch die Leerlaufdrehzahl. Da bei einem solchen Differenzdruckventil der Öffnungsdruck, beispielsweise durch Wahl einer geeigneten Rückstellfeder, eingestellt werden kann, kann auch die Höhe der gewünschten Leerlaufdrehzahl bestimmt werden.

Nach einer vorteilhaften Ausgestaltung der Erfindung kann das Differenzdruckventil als Rückschlagventil bzw. als federbelastetes Kugelventil ausgebildet werden, welches entweder im radial oder axial verlaufenden Teil des Rückströmkanales zwischen Arbeitskammer und Vorratskammer angeordnet ist. Bei Anordnung in einer axial verlaufenden Bohrung ergibt sich der Vorteil, daß die Ventilcharakteristik von der Kupplungsdrehzahl weitgehend unabhängig ist. Bei Anordnung im radial verlaufenden Teil des Rückströmkanales wirkt die Fliehkraft in Abhängigkeit von der Kupplungsdrehzahl auf die Ventilkugel.

Nach einer weiteren Ausbildung der Erfindung ist das Differenzdruckventil von außen her zugänglich, so daß es auch ausgetauscht werden kann. Dabei ist es weiterhin vorteilhaft, wenn das Ventil als Einsatzpatrone ausgebildet ist, die in eine Einheitsbohrung des Kupplungsgehäuses einsetzbar ist. Dadurch können bei einheitlicher Bauweise des Kupplungsgehäuses verschiedene Ventiltypen mit unterschiedlichem Öffnungsdruck eingebaut und nachträglich ausgetauscht werden.

Zwei Ausführungsbeispiele der Erfindung sind in der Zeichnung dargestellt und werden im folgenden näher beschrieben. Es zeigen

**Figur 1:**   Einen Axialschnitt der Kupplung mit Differenzdruckventil im radial verlaufenden Kanalteil und

**Figur 2:**   das Differenzdruckventil in einer axial angeordneten Bohrung.

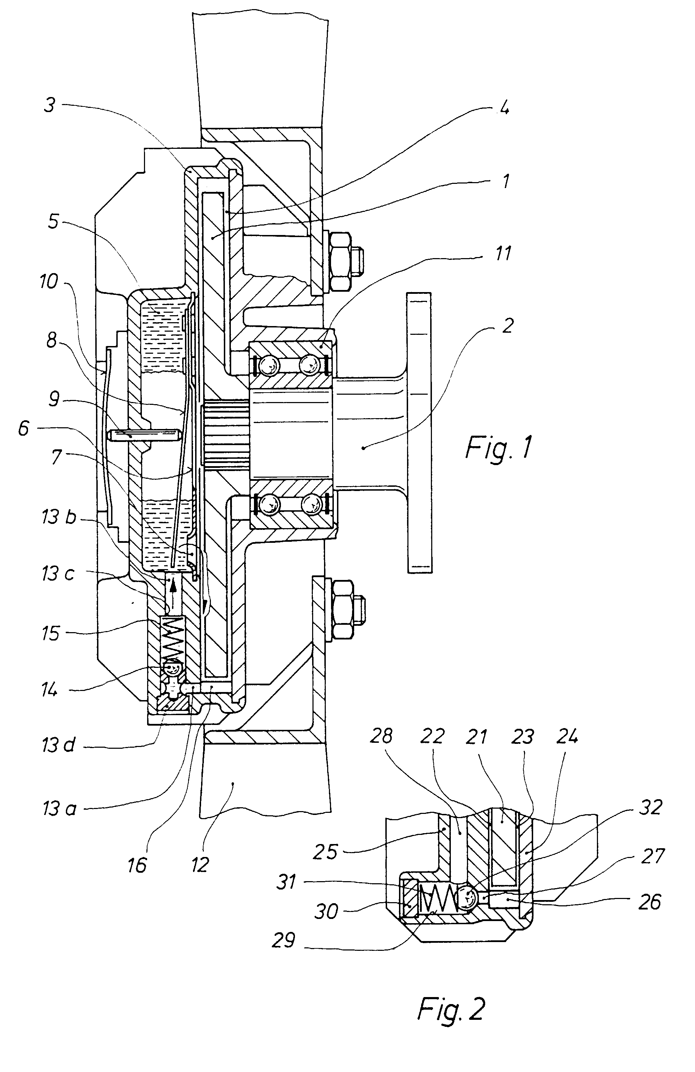

**Fig. 1** zeigt im Schnitt eine Flüssigkeitsreibungskupplung, wie sie für die Kühlung von Brennkraftmaschinen in Kraftfahrzeugen als Lüfterkupplung eingesetzt wird. Diese Flüssigkeitsreibungskupplung wird auf ihrer Antriebsseite, die durch eine Antriebswelle 2 und eine Antriebsscheibe 1 gebildet wird, von der Brennkraftmaschine direkt oder über einen Keilriementrieb angetrieben. Der Abtrieb erfolgt über ein Kupplungsgehäuse 3, welches eine Arbeitskammer 4 und eine Vorratskammer 5 aufweist, die durch eine Trennwand 6 voneinander abgeteilt sind. In der Kupplung befindet sich ein viskoses Medium (Silikonöl), welches in der Vorratskammer 5 als Flüssigkeitsring dargestellt ist, der sich infolge der Fliehkraft bei Drehung des Kupplungsgehäuses 3 ausbildet. In der Trennwand 6 befindet sich einerseits eine Ventilöffnung 7, die durch einen Ventilhebel 8 kontrolliert wird, der seinerseits über ein außen angeordnetes Bimetall 10 mittels eines Schaltstiftes 9 gesteuert wird. Andererseits befindet sich zwischen der Arbeitskammer 4 und der Vorratskammer 5 ein Rückströmkanal, der aus einem axial verlaufenden Teil 13a und einem radial verlaufenden Teil 13b gebildet ist und somit eine Verbindung zwischen der Arbeitskammer 4 und der Vorratskammer 5 herstellt. In der Arbeitskammer 4 ist im Bereich der Eintrittsöffnung des Rückströmkanales 13a ein Staukörper 16 angeordnet, der für die Rückförderung des viskosen Mediums aus der Arbeitskammer 4 in die Vorratskammer 5 sorgt. Der Zufluß des viskosen Mediums erfolgt über die Ventilöffnung 7, so daß sich bei geöffnetem Ventil 7, 8 eine Zirkulation des viskosen Mediums zwischen Vorratskammer 5 und Arbeitskammer 4 ergibt - wie durch die beiden Pfeile angedeutet. Das Kupplungsgehäuse 3 trägt eine Lüfterbeschaufelung 12 und ist über das Wälzlager 11 drehbar auf der Antriebswelle 2 gelagert.

Im radial verlaufenden Teil 13b des Rückströmkanales zwischen Arbeitskammer 4 und Vorratskammer 5 befindet sich ein Differenzdruckventil, welches aus einer Kugel 14 und einer Spiralfeder 15 besteht, welche sich einerseits im Rückströmkanal 13b an einem Absatz 13c abstützt und andererseits die Kugel 14 gegen einen konischen Sitz drückt, welcher durch einen Ventileinsatz 13d gebildet wird. Dieser weist kreuzförmig angeordnete Bohrungen auf, die einerseits mit dem radial verlaufenden Teil 13b und andererseits mit dem axial verlaufenden Teil 13a des Rückströmkanales in Verbindung stehen.

**Fig. 2** zeigt eine weitere Ausführungsvariante des Differenzdruckventiles in einem vergrößert dargestellten Ausschnitt der Kupplung, deren Antriebsscheibe 21 mit den Gehäusewänden Arbeitsspalte 22, 23 bildet. Radial außerhalb, d.h. umfangsseitig von der Antriebsscheibe 21 ist ein Staukörper 26 angeordnet, in dessen Bereich sich die Öffnung des axial verlaufenden Rückströmkanales 27 befindet. An diesen Teil des Rückströmkanales 27 schließt sich einerseits ein radial verlaufender Teil 28 des Rückströmkanales an, der zur nicht dargestellten Vorratskammer führt, und andererseits eine axial verlaufende, im Durchmesser vergrößerte Ventilbohrung 29, die nach außen durch einen Verschluß 30 abgedichtet ist. Innerhalb dieser Ventilbohrung 29 befindet sich eine Ventilkugel 32, welche über eine Ventilfeder 31 gegen einen konischen Sitz gedrückt wird, der in den Rückströmkanal 27 mündet. Die Ventilfeder 31 kann also leicht von außen in die Bohrung 29 eingesetzt und demzufolge auch leicht gegen eine andere Feder ausgetauscht werden.

Die Funktionsweise des erfindungsgemäßen Differenzdruckventiles zur Anhebung der Leerlaufdrehzahl ist die folgende: Die Flüssigkeitsreibungskupplung, d.h. ihr Ölstrom, befindet sich im Gleichgewicht, wenn folgende Gleichung gilt:

$$p_{sV} = p_{sA} + p_{dA},$$

wobei

$p_{sV}$ = statischer Druck im Vorratsraum,

$p_{sA}$ = statischer Druck im Arbeitsraum und

$p_{dA}$ = dynamischer Druck im Arbeitsraum ist.

Wenn $p_{sV} < p_{sA} + p_{dA}$ ist, dann schaltet die Kupplung nicht zu - die Ursache für den zu geringen statischen Druck im Vorratsraum ist eine zu niedrige Leerlaufdrehzahl, da diese fliehkraftbedingt den statischen Druck im Vorratsraum bestimmt. Durch das erfindungsgemäße Differenzdruckventil wird der statische Druck im Vorratsraum "künstlich" erhöht, denn der durch das geschlossene Ventil bewirkte Druck im Rückströmkanal 13a oder 27 addiert sich zum statischen Druck in der Vorratskammer 5 bzw. im radial verlaufenden Teil des Rückströmkanales 13b bzw. 28. Mit anderen Worten: Der Staukörper 16 bzw. 26 in der Arbeitskammer muß bei geschlossenem Differenzdruckventil gegen einen höheren Druck fördern, dadurch staut sich mehr Öl im Arbeitsraum an, der Füllungsgrad erhöht sich, und die Leerlaufdrehzahl steigt. Dabei bietet das Differenzdruckventil noch den Vorteil, daß die Höhe der Leerlaufdrehzahl durch die Wahl der Rückstellkraft des Ventiles, also durch eine geeignete Federkraft der Ventilfeder, genau eingestellt oder bei Bedarf auch ausgetauscht werden kann. Dabei gilt die Beziehung, daß die Leerlaufdrehzahl um so höher ist, je höher die Federkraft der Ventilfeder im Differenzdruckventil ist. Somit kann die Leerlaufdrehzahl sowohl vor Einbau der Kupplung als auch nach deren Einbau genau eingestellt oder beliebig korrigiert werden.

**Patentansprüche**

1. Flüssigkeitsreibungskupplung mit einem Antriebsglied, bestehend aus einer Antriebsscheibe (1) und einer Antriebswelle (2), und einem abtriebsseitigen Kupplungsgehäuse (3), welches eine Vorratskammer (5) und eine mittels Trennwand (6) abgeteilte Arbeitskammer (4) aufweist, in welcher die Antriebsscheibe (1) unter Bildung von Scherspalten umläuft, wobei in der Arbeitskammer (4) ein Staukörper (16) und im Kupplungsgehäuse (3) ein Rückströmkanal (13a, 13b) zwischen Arbeitskammer (4) und Vorratskammer (5) angeordnet und wobei zwischen Vorratskammer (5) und Arbeitskammer (4) eine durch einen Ventilhebel (8) gesteuerte Zuflußöffnung (7) vorgesehen ist, **dadurch gekennzeichnet**, daß innerhalb bzw. im Bereich des Rückströmkanales (13a, 13b, 13c; 27, 28) ein Differenzdruckventil (14, 15; 31, 32) angeordnet ist, welches bei einem definierten, einstellbaren Differenzdruck zwischen Arbeitskammer (4) und Vorratskammer (5) zur Vorratskammer (5) hin öffnet.

2. Flüssigkeitsreibungskupplung nach Anspruch 1, **dadurch gekennzeichnet**, daß das Differenzdruckventil als Rückschlagventil (14, 15; 31, 32)

3. Flüssigkeitsreibungskupplung nach Anspruch 2, **dadurch gekennzeichnet,** daß das Differenzdruckventil als federbelastetes Kugelventil (14, 15; 31, 32) ausgebildet ist.

4. Flüssigkeitsreibungskupplung nach Anspruch 2 oder 3, **dadurch gekennzeichnet,** daß das Differenzdruckventil (31, 32) in einer parallel zur Drehachse der Kupplung (3) angeordneten Bohrung (29) angeordnet ist, die mit dem axial verlaufenden Teil (27) des Rückströmkanales (27, 28) fluchtet.

5. Flüssigkeitsreibungskupplung nach Anspruch 2 oder 3, **dadurch gekennzeichnet,** daß das Differenzdruckventil (14, 15) im radial verlaufenden Teil (13b, 13c) des Rückströmkanales (13a, 13b) angeordnet ist.

6. Flüssigkeitsreibungskupplung nach einem der vorhergehenden Ansprüche, **dadurch gekennzeichnet,** daß der radial oder axial verlaufende Teil des Rückströmkanales von außen her zugänglich ist.

7. Flüssigkeitsreibungskupplung nach Anspruch 6, **dadurch gekennzeichnet,** daß der radial verlaufende Teil des Rückströmkanales (13b) durch einen Ventileinsatz (13d) nach außen verschlossen ist.

8. Flüssigkeitsreibungskupplung nach Anspruch 6, **dadurch gekennzeichnet,** daß der axial verlaufende Teil des Rückströmkanales (27) bzw. die mit ihr fluchtende Bohrung (29) durch ein Verschlußstück (30) nach außen abgeschlossen ist.

9. Flüssigkeitsreibungskupplung nach einem der vorhergehenden Ansprüche, **dadurch gekennzeichnet,** daß das Differenzdruckventil als Ventileinsatzpatrone mit unterschiedlichem Öffnungsdruck ausgebildet ist, welches in den Rückströmkanal einsetzbar ist.

**Claims**

1. Fluid friction coupling having a drive member, comprising a drive wheel (1) and a drive shaft (2), and a coupling housing (3) which is on the driven side and which has a supply chamber (5) and a working chamber (4) which is partitioned off by a separating wall (6) and in which the drive wheel (1) rotates with the formation of shearing gaps, a retaining body (16) being arranged in the working chamber (4) and a backflow duct (13a, 13b) being arranged, in the coupling housing (3), between the working chamber (4) and the supply chamber (5), and an inflow opening (7) controlled by a valve lever (8) being provided between the supply chamber (5) and the working chamber (4), characterised in that there is arranged inside or in the region of the backflow duct (13a, 13b, 13c; 27, 28) a differential pressure valve (14, 15; 31, 32) which opens towards the supply chamber (5) when there is a defined, adjustable differential pressure between the working chamber (4) and the supply chamber (5).

2. Fluid friction coupling according to Claim 1, characterised in that the differential pressure valve is in the form of a non-return valve (14, 15; 31, 32).

3. Fluid friction coupling according to Claim 2, characterised in that the differential pressure valve is in the form of a spring-loaded ball valve (14, 15; 31, 32).

4. Fluid friction coupling according to Claim 2 or 3, characterised in that the differential pressure valve (31, 32) is arranged in a bore (29) which is arranged parallel to the axis of rotation of the coupling (3) and which is aligned with the axially extending portion (27) of the backflow duct (27, 28).

5. Fluid friction coupling according to Claim 2 or 3, characterised in that the differential pressure valve (14, 15) is arranged in the radially extending portion (13b, 13c) of the backflow duct (13a, 13b).

6. Fluid friction coupling according to any one of the preceding Claims, characterised in that the radially or axially extending portion of the backflow duct is accessible from the outside.

7. Fluid friction coupling according to Claim 6, characterised in that the radially extending portion of the backflow duct (13b) is closed to the outside by a valve insert (13d).

8. Fluid friction coupling according to Claim 6, characterised in that the axially extending portion of the backflow duct (27), or the bore (29) aligned therewith, is closed off to the outside by a closure member (30).

9. Fluid friction coupling according to any one of the preceding Claims, characterised in that the differential pressure valve is in the form of a valve insert cartridge which has a variable opening pressure and which is insertable into the backflow duct.

**Revendications**

1. Accouplement à frottement visqueux avec un organe moteur, constitué d'une poulie motrice (1) et d'un arbre moteur (2), et avec un boîtier d'accouplement (3) côté sortie, lequel présente une chambre de réserve (5) et une chambre de travail (4), partagée au moyen d'une cloison (6), dans laquelle la poulie motrice (1) tourne en formant des chambres de cisaillement, un corps de retenue (16) étant placé dans la chambre de travail (15) et un canal de retour (13a, 13b) étant placé dans le boîtier d'accouplement (3), entre la chambre de travail (4) et la chambre de réserve (5), et une ouverture d'arrivée (16), commandée par un culbuteur de soupape (8), étant prévue entre la chambre de réserve (5) et la chambre de travail (4), caractérisé en ce qu'à l'intérieur ou dans la zone du canal de retour (13a, 13b, 13c ; 27, 28), est placée une soupape de pression différentielle (14, 15 ; 31, 32), qui s'ouvre vers la chambre de réserve (5), en cas de pression différentielle réglable, définie, entre la chambre de travail (4) et la chambre de réserve (5).

2. Accouplement à frottement visqueux selon la revendication 1, caractérisé en ce que la soupape de pression différentielle est un clapet de non-retour (14, 15 ; 31, 32).

3. Accouplement à frottement visqueux selon la revendication 2, caractérisé en ce que la soupape de pression différentielle est une soupape sphérique (14, 15 ; 31, 32) soumise à l'action d'un ressort.

4. Accouplement à frottement visqueux selon la revendication 2 ou 3, caractérisé en ce que la soupape de pression différentielle (31, 32) est placée dans un perçage (29) parallèle à l'axe de rotation de l'accouplement (3), lequel perçage est aligné avec la partie (27) s'étendant axialement du canal de retour (27, 28).

5. Accouplement à frottement visqueux selon la revendication 2 ou 3, caractérisé en ce que la soupape de pression différentielle (14, 15) est placée dans la partie (13b, 13c) s'étendant radialement du canal de retour (13a, 13b).

6. Accouplement à frottement visqueux selon l'une des revendications précédentes, caractérisé en ce que la partie, s'étendant radialement ou axialement, du canal de retour, est accessible à partir de l'extérieur.

7. Accouplement à frottement visqueux selon la revendication 6, caractérisé en ce que la partie s'étendant radialement du canal de retour (13b) est fermée vers l'extérieur par un insert de soupape (13d).

8. Accouplement à frottement visqueux selon la revendication 6, caractérisé en ce que la partie s'étendant axialement du canal de retour (27) ou le perçage (29), aligné avec celle-ci, est fermée vers l'extérieur par une pièce d'obturation (30).

9. Accouplement à frottement visqueux selon l'une des revendications précédentes, caractérisé en ce que la soupape de pression différentielle est conformée en cartouche d'insert de soupape avec pression d'ouverture différente, qui peut être insérée dans le canal de retour.

Fig. 1

Fig. 2